# EUROPEAN PATENT SPECIFICATION

(11) **EP 4 164 768 B1**
(45) Date of publication and mention of the grant of the patent: **08.10.2025**
(21) Application number: 21732198.3
(22) Date of filing: 25.05.2021
(51) Int. Cl.: B01D 46/00, B01D 46/42, B01D 46/44, B60N 2/26, B60N 2/56, B62B 9/14

(54) **AIR PURIFYING DEVICE**
LUFTREINIGUNGSVORRICHTUNG
DISPOSITIF DE PURIFICATION D'AIR

(30) Priority: 12.06.2020 WO PCT/EP2020/066277
(43) Date of publication of application: 19.04.2023
(73) Proprietor: bubl. AB, 611 35 Nyköping (SE)
(72) Inventor: KARLSSON, Conny, 611 93 Nyköping (SE)
(74) Representative: Zacco Sweden AB
(86) International application number: PCT/EP2021/063904
(87) International publication number: WO 2021/249767

(56) References cited:
- WO-A1-2016/078773
- WO-A1-2018/011722
- WO-A1-2020/080761
- WO-A1-2020/126208
- WO-A2-2008/010209
- WO-A2-2010/031846
- CN-A- 105 559 435
- KR-B1- 101 995 280

## Description

### TECHNICAL FIELD

The present disclosure relates to an air purifying device. The air purifying device is configured to be arranged in association with a child carrying device or a seat unit. The disclosure further relates to a child carrying device and a seat unit comprising such an air purifying device.

### BACKGROUND

Air quality is an increasing problem in the world due to pollution. In particular, in urban areas, the air quality is compromised due to traffic from vehicles driven on carbon-based fuel, particularly from the fumes and gases they exhaust. However, also particles that are brought into the air by the friction and mechanical action from tires against the surface on which they are transported contribute to the air pollution. Furthermore, also industry, warming of houses with carbon based material etc. causes the air to be polluted by particles.

Infants are very sensitive to polluted air and exposure to such polluted air may lead to for instance lung diseases, but also other diseases due to uptake of for instance heavy metals via the air into the lungs or into the blood stream and/or other tissues. Thus, there is a need for solutions on how to protect small infants against polluted air. There is also need for solutions on how to protect humans in general against polluted air.

One known solution for an air-supply device is disclosed in WO 2016/078773 A1. The document discloses an air-supply device for supplying breathing air into a breathing air region. The air-supply device has two inflow openings arranged at different ends of the air-supply device for supplying pre-purified breathing air, an interior space and an outflow region, via which breathing air flows out into the breathing air region. Spacer means are arranged through the entire interior space, between an air impermeable layer and an air permeable outflow layer in order to ensure a spacing between the two layers.

### SUMMARY

In the present disclosure, the term "child" will be used, but should be understood to comprise "baby", "new-born", "toddler" and "infant".

An object of the present disclosure is to reduce the exposure of polluted air to a human. In particular, an object of the present disclosure is to minimize the pollutions inhaled by a child when carrying, strolling, walking or transporting a child in an interior or exterior environment. The pollutions in question may be macro particles, micro particles, nano particles and gases. The herein mentioned objects are achieved by an air purifying device, a child carrying device and a seat unit, according to the independent claims.

The present disclosure is mainly illustrated and described herein in relation to child and a child carrying device, such as a pram, a stroller, a baby cot, a baby carrier or a child car seat. However, the present disclosure is also relevant to similar application for humans in general, i.e. for children, teenager and adults. With the technical features according to the present disclosure customized in size for i.e. an adult, instead of a child, similar technical effect and benefits are achieved. Suitable applications for an adult, corresponding to a child carrying device for a child, may for example be different types of seat units, such as chairs and seats. Thus, the present disclosure may be configured to be arranged in a wheel chair, an office chair, a gaming chair or a vehicle seat, such as an aircraft seat, train seat or a car seat. It is understood that all the various examples mentioned herein relating to a child and a child carrying device, as well as objects and technical effects, are valid for various seat unit, for children as well as adults and teenagers.

The object is achieved by providing a device for purifying air, said device being adapted to be arranged in association with an inner area of a child carrying device or seat unit. With such an air purifying device, air surrounding the child carrying device or seat unit may be filtered and purified before being provided to the space of the child carrying device or seat unit where a head is positioned. The idea is to provide a local environment of purified air around the head, so as to prevent air that has not been filtered and purified from entering the child carrying device or seat unit, in particular where the head is positioned. Thus, an air cushion of purified air is provided around the head. Hence, the present disclosure provides a solution for reducing the pollutions inhaled by a human in a surrounding environment.

Thus, according to an aspect of the present disclosure, an air purifying device is provided, the air purifying device being configured to be arranged in a child carrying device or a seat unit in association with an inner area of the child carrying device or the seat unit where the head is to be positioned, the air purifying device is portable or integrated in the child carrying device or the seat unit, the air purifying device being essentially U-shaped with a back portion and side portions, the air purifying device comprising: a back layer; an air-permeable distribution layer arranged opposite to the back layer, the distribution layer being directed towards the inner area; an internal cavity formed between said back layer and said distribution layer; a first air inlet arranged in fluid communication with the internal cavity; a first ventilator arranged to draw air from the surroundings through the air inlet into the internal cavity, so that an overpressure is generated in the cavity; and a first air filter arranged to purify the air from the surroundings before being discharged from the air purifying device into the inner area, wherein the first air filter is arranged downstream of the first air inlet and upstream of the distribution layer, wherein the first air filter is removably arranged to allow replacement of the first air filter, wherein the overpressure in the internal cavity will force the air to flow from the internal cavity through the distribution layer towards the inner area, the first air inlet is arranged in the back portion of the air purifying device, the air purifying device further comprises a guide element arranged opposite to the first air inlet to guide the air entering the internal cavity via the first air inlet.

By means of the air purifying device according to the disclosure, a local environment of purified air is achieved in the inner area of the child carrying device or the like. The local environment of a child's head in the child carrying device will thereby be improved and the risk of inhaling polluted air is reduced. The same effect of providing a local environment of purified air around the head is also valid for all other previously mentioned applications for seat units. According to another aspect of the present disclosure, a child carrying device is provided, the child carrying device comprising the air purifying device as disclosed herein. According to another aspect of the present disclosure, a seat unit is provided, the seat unit comprising the air purifying device as disclosed herein.

Further objects, advantages and novel features of the present disclosure will become apparent to one skilled in the art from the following details, and also by putting the disclosure into practice. Whereas the disclosure is described below, it should be noted that it is not restricted to the specific details described. Specialists having access to the teachings herein will recognise further applications, modifications and incorporations within other fields, which are within the scope of the disclosure.

### BRIEF DESCRIPTION OF THE DRAWINGS

For fuller understanding of the present disclosure and further objects and advantages of it, the detailed description set out below should be read together with the accompanying drawings, in which the same reference notations denote similar items in the various drawings, and in which:
- Figure 1: schematically illustrates a cross-sectional view of an air purifying device according to an example;
- Figures 2a-b: schematically illustrate cross-sectional views of an air purifying device according to examples;
- Figures 3a-b: schematically illustrate cross-sectional views of an air purifying device according to examples;
- Figure 4: schematically illustrate a cross-sectional view of an air purifying device according to an example;
- Figures 5a-b: schematically illustrate perspectives views of an air purifying device according to examples;
- Figure 6: schematically illustrates an airflow through an air purifying device according to an example;
- Figures 7a-e: schematically illustrate airflow in a child carrying device and/or a seat unit comprising an air purifying device according to examples;
- Figure 8: schematically illustrates a child carrying device comprising an air purifying device according to an example;
- Figure 9: schematically illustrates an seat unit comprising an air purifying device according to an example;
- Figure 10: schematically illustrates airflow in an air purifying device according to an example;
- Figures 11a-b: schematically illustrate an airflow in a child carrying device according to examples.

### DETAILED DESCRIPTION

The present disclosure provides a solution for reducing the pollutions inhaled by a human in a surrounding environment. The present disclosure provides an air purifying device, wherein the air purifying device may be configured to be arranged in association with an inner area where a head is to be positioned. Hence, the air purifying device may be configured to be arranged in association with an inner area where a head is to be positioned in e.g. a wheel chair, an office chair, a recliner, a waiting room chair or in a vehicle seat, such as seat in an airplane, train, buss or car. However, in the detailed description, the present disclosure will mainly be described when applied in a child carrying device. It is understood that all the various examples relating to a child and a child carrying device also apply for the various applications for seat unit for children, adults and teenagers, and vice versa.

According to an aspect, an air purifying device, configured to be arranged in a child carrying device or a seat unit is provided. The air purifying device is configured to be arranged in association with an inner area of the child carrying device or the seat unit where the head is to be positioned. The air purifying device is portable or integrated in the child carrying device or the seat unit. The air purifying device is essentially U-shaped with a back portion and side portions. The air purifying device comprises: a back layer; an air permeable distribution layer arranged opposite to the back layer, the distribution layer being directed towards the inner area; an internal cavity formed between said back layer and said distribution layer; a first air inlet arranged in fluid communication with the internal cavity; a first ventilator arranged to draw air from the surroundings through the first air inlet into the internal cavity, so that an overpressure is generated in the internal cavity; and a first air filter arranged to purify the air from the surroundings before being discharged from the air purifying device into the inner area. The first air filter is arranged downstream of the first air inlet and upstream of the distribution layer. The first air filter is removably arranged to allow replacement of the first air filter. The overpressure in the internal cavity will force the air to flow from said internal cavity through said distribution layer towards the inner area. The first air filter is arranged downstream of the first air inlet and upstream of the distribution layer. The air purifying device further comprises a guide element arranged opposite to the first air inlet to guide the air entering the internal cavity via the first air inlet.

The present disclosure provides a solution for minimizing the pollutions inhaled by a child when strolling, walking or transporting a child in an interior or exterior environment. Thus, the present disclosure provides an air purifying device, wherein the air purifying device being configured to be arranged in association with an inner area of a child carrying device.

Said child carrying device may be a pram, a stroller, a baby cot, a baby carrier or a child car seat. According to an example, the air purifying device is configured to be arranged in association with a top end of a child carrying device. By top end means a top edge of the child carrying device, or an inner surface in an upper area of the child carrying device. The top end is further meant to be a part of the child carrying device where a child's head is positioned, or a part close to or directly adjacent to the part where the child's head is positioned. The air purifying device may be fitted on the top edge of a child carrying device. For a child carrying device equipped with a canopy or convertible top, the air purifying device may be fitted against the inside surface of said canopy or convertible top. The fastening means for fitting said air purifying device to a child carrying device are not crucial, as long as they do not negatively affect the function of the air purifying device as disclosed herein. The air purifying device may be configured to be removably arranged on a child carrying device.

The air purifying device may be a portable air purifying device configured to be arranged in association with an inner area of a child carrying device or a seat unit. That the air purifying device may be portable means that the air purifying device is a separate unit configured to be carried or moved around and positioned where applicable. The portable purifying device may comprise at least the first air filter, the first ventilator, the back layer, the distribution layer and the inner cavity. Alternatively, the air purifying device is integrated in the child carrying device or the seat unit. According to an example, the air purifying device may be integrated in a canopy or convertible top of a child carrying device. According to another example, the air purifying device may be integrated in a headrest of a seat unit.

The air purifying device comprises a back layer and an air-permeable distribution layer arranged opposite to the back layer. The back layer may be essentially air impermeable. The air purifying device may be configured to be arranged with the distribution layer directed towards an inner area of the child carrying device or the seat unit wherein the head is to be positioned. The back layer and distribution layer are arranged to form an internal cavity there between. The air purifying device further comprises a first ventilator arranged to draw air from the surroundings through the first air inlet into the internal cavity, so that an overpressure is generated in the internal cavity. The first ventilator may comprise a motor and a rotating arrangement of vanes or blades. Air enters the first air inlet by suction caused by the first ventilator and is subsequently supplied to the internal cavity. Although "ventilator" is the term used in the present disclosure to disclose the means by which air is drawn into the internal cavity, there are other terms normally used in connection with the same type of functional entity, such as a "fan". Air always choses a path with less flow resistance. The distribution layer may comprise a material with a lower airflow resistance than the back layer. When the back layer is air-impermeable and the distribution layer is air-permeable and an overpressure is built up and generated in the internal cavity, the air in the internal cavity will be forced to flow through the air-permeable distribution layer. The distribution layer comprises a material configured, such that the air will be evenly distributed within the distribution layer, thereby providing a local environment of purified air in the inner area of the child carrying device or the seat unit. Thus, the combination of the material of the air-permeable distribution layer, the back layer, and the first ventilator actively drawing air into the internal cavity of the air purifying device, leads to an overpressure. The lower airflow resistance of the material in the distribution layer offers some resistance against the air from exiting the air purifying device, in the sense that the air has to travel through said material in order to exit the air purifying device.

The internal cavity may be arranged adjacent to the distribution layer. According to examples, the distance between the back layer and the distribution layer may be at least 8 mm, preferably at least 10 mm, or more preferably at least 15 mm. The distance between the back layer and the distribution layer may thus correspond to the width of the internal cavity. The internal cavity may be an empty space. Thus, the internal cavity may be configured as an air duct. According to an example, the internal cavity is between 10-40 mm. Such dimensions may allow the air to flow freely and evenly. A too narrow internal cavity may lead to disturbing acoustic phenomenons and also increase the air resistance. The inner cavity may be tapered. The inner cavity may be wider in the end close to the first air inlet than in the opposite end. By means of the internal cavity, the air is evenly distributed within the entire internal cavity before going into the distribution layer, forced by the overpressure in the inner cavity. As a result, the air is efficiently diffused evenly over and within the entire distribution layer before exiting into the inner area. Due to the improved and even air diffusion over and within the distribution layer, the air flow velocity in the inner area decreases, which reduces the risk of draught. Said air purifying device further comprises a first air inlet with a first inlet area. The first air inlet may be an inlet aperture where the air enters the air purifying device. According to examples, surrounding air may be drawn towards the first air inlet via an air duct, a hose or any other similar device from an air intake. Thus, the air intake may thus be arranged at a distance from the first air inlet arranged in the air purifying device. The first air inlet may be arranged in the back layer. The first air inlet may thus comprise an aperture in the back layer. Said first air inlet may be tightly arranged in said back layer. The first air inlet may alternatively be arranged in a bottom side or upper side of the air purifying device. The air is discharged from the air purifying device through an outlet area. By means of the distribution layer and the air being distributed within the distribution layer, the outlet area is larger than the first inlet area of the first air inlet. According to examples, the outlet area of the distribution layer is at least five times as large as the first inlet area of the first air inlet, preferably at least 10 times as large, more preferably at least 20 times as large. By distributing the air over a larger area, the velocity of the air is reduced, whereby the risk of draught in the inner area is reduced.

The guide element may comprise a surface facing the incoming airflow from the first air inlet. The guide element may be arranged inside the air purifying device opposite to the first air inlet to direct the air entering the air purifying device via the first air inlet towards, or along, the inner cavity. That the guide element is arranged opposite to the first air inlet may be interpreted as that the guide element is arranged to face the incoming airflow from the first air inlet. The guide element may be arranged opposite the first air inlet at a predetermined distance from the first air inlet. The predetermined distance may be adapted to the present configuration, e.g. depending on where the first air inlet and the first ventilator is positioned. The predetermined distance is configured to allow efficient airflow from the first air inlet to the internal cavity. The first ventilator may be arranged between the first air inlet and the guide element. By means of the guide element, the air entering the air purifying device via the first air inlet is guided in and/or directed towards the inner cavity. In addition, the guide element may block or reduce the airflow in certain direction, e.g. from passing out to the inner area at specific areas. For example, air exiting in the neck region of e.g. a car seat or office chair may be unnecessary, since this area is blocked by the head when the seat or chair is in use. Also, air coming straight from the first air inlet and/or the first ventilator may have a relatively high speed. If such air hits the distribution layer, it may go straight through the distribution layer and cause draught in the inner area. Thus, by means of the guide element, the air flow pattern within the air purifying device is controlled, whereby the airflow pattern reaching the inner area is controlled. In addition, by means of the guide element, air may be directed to side sections of the internal cavity arranged on opposite sides of the inner area. Air flowing out through the distribution layer may thus be directed toward the inner area from opposing sides, whereby the opposing airflows may meet in the middle of the inner area. As a result, the velocity of the air may be further reduced and the purified air maintained in the inner area. Due to that the inner area is occupied by purified air and that there is a continuous airflow of purified air exiting the distribution layer, non-purified surrounding air is prevented from entering the inner area. Hence, a local environment of purified air is created in the inner area.

According to an example, the guide element may comprise an air-impermeable material arranged over a guide element area opposite to the first air inlet inside the air purifying device, wherein the guide element area is at least as large as a first inlet area of the first air inlet.

According to an example, the guide element may be configured to block the air from passing out to the inner area at specific areas. The guide element may thus control the direction of the air flow and make sure that the air do not flow straight into the inner area B and cause draught, and/or bypasses the first air filter. Thus, the guide element may be configured to prohibit the air to take the shortest path into the inner area. The guide element may assist in distributing the air witihin the entire internal cavity, before exiting the distribution layer due to the over pressure in the internal cavity.

According to an example, the guide element may comprise an at least partly air-impermeable material arranged over a guide element area opposite to the first air inlet inside the air purifying device, wherein the guide element area is at least as large as a first inlet area of the first air inlet. By means of such configuration, the airflow through the guide element area may not be completely blocked, but significantly reduced. By such configuration, the airflow pattern through the air purifying device may be controlled by adjusting the air permeability of the guide element area. According to an example, a portion of the distribution layer with a lower air permeability than the rest of the distribution layer may be the guide element.

According to an example, the guide element may be arranged to guide the air inside the internal cavity. The guide element may thus be arranged in the internal cavity to direct the air inside the internal cavity.

By means of the guide element, the air drawn from the first air inlet into the internal cavity by the first ventilator will be distributed throughout the entire internal cavity. The guide element may be configured to prevent the air from taking the shortest distance to exit the air purifying device directly opposite the first air inlet, which would otherwise cause a draught over the inner area. Thereby the purified air will be discharged from the air purifying device over a larger surface. Furthermore, the distribution of the air throughout the internal cavity, and thus exiting the air purifying device over a larger surface, will entail a lower airflow to be provided in the inner area. This is an important aspect as it is not desirable for a child to be positioned in a draughty environment. The guide element may be manufactured by any suitable material, such as plastic, metal, or any other material that has enough stiffness to withstand the airflow and to direct said airflow within the internal cavity. The material of the guide element may not bend or otherwise change shape upon exposure to the airflow provided to the internal cavity by the ventilator. The guide element may have a convex surface facing the incoming airflow from the first air inlet. In one example, the guide element may be an essentially air-impermeable plate arranged opposite to the first air inlet. The air purifying device may further comprise a frame device. The guide element may form part of the frame device. The distribution layer may be attached to the frame device. The first air filter may additionally or alternatively be attached to the frame device. By means of the frame device, the stability of the air purifying device is improved. The frame device may comprise a first frame element connected to the distribution layer, and a second frame element connected to the first air filter.

According to the invention, the first air filter is arranged upstream of the distribution layer. This way, the air will be purified before being distributed through the distribution layer. The first air filter may be arranged in association with the first ventilator. The first air filter may be arranged upstream or downstream of the first ventilator. The first air filter is arranged upstream of the distribution layer and downstream of the first air inlet. According to an example, the first air filter is arranged upstream of the distribution layer, and preferably downstream of the first ventilator. The first air filter may be arranged inside the internal cavity. Alternatively, the first air filter may be arranged between the first ventilator and the internal cavity. The first air filter may comprise one of more compact filters, bag filters or panel filters arranged in direction of the airflow inside the internal cavity. The first air filter may comprise at least one fibreglass filter and/or at least one pleated filter. The first air filter may comprise at least one HEPA (High Efficiency Particulate Air) filter. The first air filter may comprise at least one cartridge filter, such as HemiPleat^{®}. When the first air filter is arranged upstream of the distribution layer, the distribution layer may be the outermost layer of the air purifying device, facing the inner area of the child carrying device. According to an example, not covered by the invention, the first air filter may be arranged downstream of the distribution layer. This way, the air is evenly distributed through the distribution layer before being filtered/purified and finally being discharged into the inner area. The first air filter may be configured to follow the extension of the distribution layer, in order to make sure that the air leaving the distribution layer is purified through the first air filter before being discharged through the outlet area. In this example, the first air filter may be the outermost layer facing the inner area of the child carrying device. The first air filter may be configured, so as to not provide any significant airflow resistance. However, it is feasible that the first air filter could be comprised of a material that offers a low level of airflow resistance, as long as it does not negatively affect the airflow from the internal cavity and into the inner area. The first air filter being removable arranged means that the first air filter is replaceable. This way, service is facilitated and the first air filter can be replaced instead of discarding the whole air purifying device.

By means of the air purifying device, surrounding air may be effectively purified and delivered to the inner area of a child carrying device or a seat unit. In addition, the air purifying device is capable of preventing non-purified surrounding air from entering the inner area. Furthermore, using the air purifying device, the percentage of microparticles present in the air in the inner area is significantly reduced compared to the surrounding air. Thus, a local environment of purified air is provided around the head when the air purifying device is arranged in, or integrated in, a child carrying device or seat unit. Hence, the present disclosure provides a solution for reducing the pollutions inhaled by a human in a surrounding environment.

The air purifying device may further comprise a second air filter arranged to cover an outside of the first air inlet. The second air filter may be adapted to prevent larger objects and macro particles in the air from entering the air purifying device. It may for instance relate to leaves, gravel, larger soot flakes, plastic or paper garbage that may be carried by the wind, etc. Preferably, the second air filter is composed of a textile, a nonwoven textile, an open cell foam material, or a mesh material. Any material preventing larger objects and macro particles from entering the air purifying device may be used as the second air filter, as long as the air is not prevented from being drawn or suctioned into the internal cavity of the air purifying device by the first ventilator. In one example, the second air filter may form part of the child carrying device. The second air filter may be arranged upstream of the first ventilator and the first air filter.

According to an example, the air purifying device further comprises a front layer arranged to face the inner area. The front layer may be a fabric or textile. The front layer may be arranged to cover/abut the first air filter or the distribution layer, depending on the position of the first air filter in relation to the distribution layer. The front layer may be a padded layer, making the air purifying device softer in case the head abuts the air purifying device. The front layer may be a removable front layer. The front layer being removable is advantageous in that the front layer may become dirty due to the exposure to e.g. children, and the front layer can thereby easily be removed and be washed. Alternatively, the front layer may be design as a disposable front layer. The disposable front layer may be replaced by a new one after use or wear. The front layer may be connected to the frame device. The front layer may be connected to the second frame element of the frame device. In one example, the first air filter is connected to an inner side of the second frame element and the front layer is connected to an outer side of the second frame element, the outer side being opposite to the inner side. In another example, the front layer is shaped as a bag or pouch and surrounds/encloses the distribution layer and the first air filter. The front layer may be openable/closable by means of a zipper, magnets, push buttons or hook and loop elements, such as Velcro. The front layer may further be connected to the frame device by means of hook and loop elements, snap-fit connections or similar.

According to an example, the thickness and material structure of the distribution layer is configured such that the air will be evenly distributed within the distribution layer before exiting said distribution layer. The distribution layer may have a thickness of at least 3 mm, or at least 4 mm, or at least 5 mm. According to examples, the thickness of the distribution layer may be 3-15 mm, or 4-10 mm, or 5 mm. The thickness may be determined according to DIN EN ISO 5084. The thickness values mentioned above in combination with the material structure enables efficient diffusion within the distribution layer. The thickness and material structure enables that air may travel within the distribution layer in multiple directions, and not only pass straight through the distribution layer. The air is hence split into multiple directions within the distribution layer, before exiting the distribution layer. The distribution layer may have a mass per unit area of 100 - 600 g/m², or 150 - 400 g/m², or 175 - 275 g/m². Thus, the distribution layer may be relatively light in relation to its thickness, which is favourable. The distribution layer may have a compression stress value (determined according to DIN EN ISO 3386-1) of 0.5-10 kPa, or preferably 1-8 kPa or more preferably 2 - 6 kPa. The compression stress value is a measure of the load-bearing properties of the material. The compression stress value above enables that the distribution layer withstand loads tending to reduce the thickness, which may negatively affect the diffusion of air within the distribution layer. By means of the properties mentioned above, improved diffusion av air within the distribution layer may be achieved.

According to an example, the distribution layer may comprise a material comprising air gaps and obstacles, wherein the air gaps and obstacles are configured to force the air to diffuse and take a meandering path through the distribution layer. Hence, a winding airflow pattern through the distribution layer may be achieved, which reduces the velocity of the airflow, and hence the draught in the inner area.

According to an example, the distribution layer may comprise a spacer material layer arranged between two layers of fabric. Thus, the two layers of fabrics and the space material layer are air permeable. The two layers of fabrics and the space material layer may comprise, or consist of, polyester and/or nylon. The spacer material may comprise pile yarns. This means that the spacer material layer may comprise multiple threads arranged to extend between the two layers of fabric, wherein air gaps are arranged between the treads. The spacer material may be manufactured via different textile manufacturing techniques including weaving and knitting.

Each thread may be arranged in a longitudinal direction extending from the first layer towards the second layer, or vice versa. Hence, the threads are arranged in a at least partly transverse direction in relation to the two layers of fabric. The threads operate as spacers, keeping the two layers of fabric separated. The treads between the two layers of fabric may be regarded as obstacles for the air flowing in air gaps in between the treads. Thus, the spacer material layer arranged between two layers of fabric comprises air gaps and obstacles configured to force the air to diffuse and take a meandering path through the distribution layer. Due to the air gaps and threads, improved air diffusion is achieved. In addition, the distribution layer may be relatively thick while still light weight. The spacer material may comprise at least 50 transverse threads per square centimetre, preferably at least 150 threads/cm², more preferably at least 250 threads/cm². With a higher number of threads, the diffusion of air may be increased, which in turn may reduce the velocity of the airflow and the draught in the inner area. An increased number of threads also makes the distribution layer more resistant to compression stress. According to an example, at least one of the fabric layers may comprise a mesh fabric. The two layers of fabric may thus comprise a first mesh layer and a second mesh layer. The two layers may consist of the same type of mesh fabric, or different ones. Mesh fabric facilitates a light weight and resistant solution providing improved air distribution.

According to an example, the distribution layer may comprise a foam material. The foam material may have an at least partly open cell structure. Thus, the distribution layer may comprise an open-cell foam material. The foam material comprises air gaps and obstacles configured to force the air to diffuse and take a meandering path through the distribution layer. The material of the distribution layer may be a cellular plastic in a foam material or a polyester resin with an open cell structure and low density. A cellular plastic is a type of plastic containing numerous cells or pores disposed uniformly throughout its mass. An open cell structure means that the cells are connected to each other, which makes the material soft, light and airy. Such a material typically has a higher permeability than a material with a closed cell structure. The distribution layer may comprise a material with a cell diameter of between 2000 to 3500 micrometres. An open cell structure and said cell diameter results in a high permeability/porosity of the distribution layer, which causes a low airflow resistance and thus a limited pressure drop of the airflow when the air passes through the distribution layer. The flow resistance and the pressure drop causes the air to spread and to be distributed within and throughout the distribution layer. This way, the outlet area through which the air is discharged from the air purifying device is larger than the inlet area of the first air inlet to the internal cavity, and a substantially even distribution of air is achieved over a larger area. By having a larger outlet area than inlet area, the air is discharged with a lower flow rate than when supplied to the internal cavity through the first air inlet, by means of the ventilator. A low flow rate is advantageous in that draught is avoided over the inner area. The extension/size/configuration of the distribution layer may thus determine the outlet area. The outlet area may thus depend on the distribution of the air within the distribution layer. Depending on which layer is the outermost layer facing the inner area, the outlet area may be formed in the distribution layer, the first air filter or the front layer.

The first air filter may comprise an electrostatically charged material and/or a triboelectric filter and/or active carbon. The first air filter may be configured to filter the air from micro particles in the air, such as heavy metals, gases etc., that may be harmful for a child to inhale. The first air filter may be made of an electrostatically charged material. Thereby, both negatively charged particles and positively charged particles in the air will be filtered. Preferably, the electrostatically charged material is a non-woven textile, preferably of spunbound polypropylene. The natural charge gained during manufacturing of said material attacks both negative and positive particles from the airflow, which results in high capturing rates of microparticulate contaminants. Thus, said material encompasses both high filtration efficiency and dust-holding qualities, together with low airflow resistance. According to one preferred embodiment, the first air filter is a triboelectric filter. The first air filter may have a basis weight of 40-100 g/m², more preferably 50-100 g/m², even more preferably 60-90 g/m². The first air filter may have an airflow resistance of 5-10 Pa, preferably 7-9 Pa, when tested at 9.5m/min over 100 cm². Furthermore, the first air filter may have a thickness of 0.5-5 mm, preferably 1-4 mm, even more preferably 1-3 mm, and most preferably 1.5-2 mm. According to another example, the first air filter comprises active carbon. Thereby the air may also be purified from gases. The active carbon may be comprised as part of a composition comprising the active carbon, said composition being added to the material that the first air filter comprises. Alternatively, active carbon may be included in the first air filter material directly. It is important that the first air filter is capable of purifying air from micropollutants, and optionally gases, while not substantially affecting the airflow through the air purifying device. Particles as small as 0.1 µm to 2.5 µm may be removed from the air by the first air filter. The first air filter may be configured to remove particles in the sizes of 0.1-1000 µm, or more preferably 0.1-100 µm, 0.1-10 µm, or 0.1-0.3 µm. The size refers to the diameter of the particle.

The distribution layer is arranged so that the air exiting the distribution layer flows in a direction towards the inner area. According to an example, the air purifying device may be arranged to at least partly surround the inner area. According to an example, the air purifying device is arranged to extend at least 150 degrees, or at least 180 degrees, or at least 210 degrees or at least 240 degrees around the inner area where the head is to be positioned. By arranging the air purifying device to surround a larger part of the inner area, the quality of the air within the inner area is improved.

According to an example, the first air inlet may be arranged in a middle portion of the air purifying device and the internal cavity is configured to extend in at least two different directions from the first air inlet. The at least two different directions may be arranged at least partly away from each other. According to an example, the air may flow through the first air inlet into the internal cavity and then split up in at least two opposite directions. Alternatively, the air flow may split up in at least two different directions from the first air inlet prior to entering the internal cavity, e.g. within the first ventilator or in a ventilator housing. The separation, i.e. split, of the airflows may be achieved by means of the guide element. By means of that the internal cavity is configured to extend in at least two different directions from the first air inlet, the air distribution within the internal cavity is improved, facilitating an evenly distributed and steady airflow through distribution layer.

The air purifying device is at least partly arc-shaped or U-shaped. The air purifying device is essentially U-shaped with a back portion and side portions. This may mean that the air purifying device may be essentially U-shaped with a back portion arranged between two side portions, wherein the side portions may be arranged essentially in parallel. An at least partly arc-shaped purifying device may comprise a middle portion arranged between two side portions. The middle portion may also be referred to as the back portion, and vice versa. According to the invention, the first air inlet is arranged in the back portion. The guide element may then be arranged to direct the air from the back portion to the side portions of the air purifying device.

The first air inlet is arranged in the back portion. When the air purifying device is to be arranged on a child carrying device where the child carrying device in itself is to be further attached to e.g. a vehicle seat, an air intake arranged in fluid connection with the first air inlet may be placed in a side portion, a top portion or any other suitable position, such that the further attachment of the child carrying device will not block the intake of air to the air purifying device. Regardless of where the first air inlet is positioned, the guide element may be placed directly opposite the first air inlet and the first ventilator. According to an example, the guide element may be placed on an inner surface of the internal cavity directly opposite the first air inlet and the first ventilator. The first air inlet may advantageously be arranged on a position different from the position of the outlet area of the air purifying device. Thus, the first air inlet may be arranged, such that it does not interfere with the inner area.

Furthermore, the air purifying device may be flexible. The air purifying device may be flexible in its entirety or in parts of the device. According to an example, the back portion may be rigid or semi-rigid, and the side portions flexible. This would make the air purifying device versatile in terms of what kind of child carrying device in association with which the air purifying device should be arranged. For instance, different brands of baby prams have a general uniform shape, but the exact measurements regarding width, length and curvature of the front of the pram may vary. By the solution mentioned above, one single model of the air purifying device may be used in most baby prams, regardless of brand or model. The same versatility would apply for different brands and models of strollers, baby carriers and child car seats etc.

According to an example, the air purifying device may be configured to be arranged, such that the back layer is placed adjacent to or against an inner surface of the child carrying device. The air purifying device may be configured to be arranged, such that the back layer is placed adjacent to or against an inner surface of a convertible top. According to another example, the air purifying device may be configured to be arranged by fastening means to an upper edge of the child carrying device. This would be practical in cases where the child carrying device does not have a convertible top.

According to an example, the air purifying device further comprises a recirculation device arranged to draw purified air from the inner area into the air purifying device. This way, the purified air in the inner area will pass through the air purifying device and once again be discharged through the outlet area into the inner area. The purified air will thereby be purified again and thereby further contribute to providing an air cushion of purified air around the child. The recirculation device may comprise a second air inlet arranged in fluid communication with the inner area and a recirculation channel arranged to lead the purified air drawn from the inner area to a position upstream of the first ventilator. The recirculation channel may thus be arranged in fluid communication with the first air inlet. In one example, the recirculation channel is arranged, such that the purified air drawn from the inner area is flowing essentially perpendicularly to the air from the first air inlet. According to another example, the recirculation channel is arranged in fluid communication with the internal cavity and thus leads the purified air from the inner area to the internal cavity, downstream of the first ventilator. The second air inlet may comprise an aperture in the outermost layer facing the inner area of the child carrying device. For example, the second air inlet may comprise an aperture in the distribution layer, the first air filter or the front layer. Thereby, a recirculation of the air in the inner area is enabled. The recirculation channel may extend through the distribution layer, the first air filter and/or the front layer into the internal cavity. In one example, the recirculation device is configured to passively draw air from the inner area into the internal cavity. The second air inlet may typically have a smaller second inlet area than the first inlet area of the first air inlet. The much larger flow of air though the first air inlet will thereby cause air from the inner area to be drawn into the recirculation channel and the air purifying device.

According to another example, the recirculation device comprises a second ventilator arranged in connection with the second air inlet. The second ventilator may be arranged to drive the airflow from the inner area into the internal cavity. However, it is important that the airflow provided through the second air inlet is lower than the airflow provided through the first air inlet, so as to not disrupt the air cushion already provided by air supplied through the first air inlet. A capacity of the second ventilator should be preferably 5-50% of a capacity of the first ventilator. Ideally, the airflow through the first air inlet is in the order of about 2 m/sec, and the airflow through the second air inlet is about 0.2 m/sec.

The first and/or second ventilator may be driven by a battery. However, it may also be possible to use another power source such as solar cells. According to one embodiment, the air purifying device is provided with a cable so that the ventilators may be charged and driven directly by electricity from a power outlet when such an outlet is available. It may also be provided with a cable that can be connected to a charging outlet in a car or any other vehicle. The cable may be detachable from the air purifying device to ensure full portability.

The first ventilator may be configured to cause a flow of air of 100-350 L/minute into the internal cavity of the air purifying device. Thus, an overpressure is created in the internal cavity of the air purifying device. The overpressure results in the air being forced through the first air filter and the distribution layer. Thus, the thereby purified air will reach the inner area where the head is positioned. As disclosed above, a second ventilator should provide a lower flow of air to not disrupt the initial airflow provided by the first ventilator.

The airflow out through the air purifying device may be such that the airflow where the head is to be positioned in the inner area is less than 0.15 m/s. According to an example, said airflow is about 0.09 m/sec. An airflow below 0.15 m/sec will not be experienced as draughty by a child or other humans. However, said airflow is sufficient to create a local environment of purified air, preventing non-purified air from the outside of e.g. a child carrying device from reaching a child's head positioned in the inner area. This is relevant for all airflow reaching the inner area, regardless of whether the airflow is provided by the first or second ventilator.

According to an example of the present disclosure, the air purifying device comprises a cover connected to the back layer. The cover may also be referred to as a housing or a cap. The cover may be arranged to accommodate the first ventilator, the at least one air quality sensor, the power source for driving the first ventilator, batteries and/or other electronics. The cover may be removably connected to the back layer, such that the components therein can be replaced or easily go through service. In the event that the first ventilator is powered by a battery, the battery may suitably be removed from the air purifying device to be charged.

According to an example, the first ventilator may be arranged between the first air inlet and the guide element. According to an example, the first ventilator may comprise a radial fan. The radial fan may pull in air from the first air inlet and discharge the air in a radial direction. The use of a radial fan enables a slim configuration of the air purifying device and assists in the guiding of the air into the internal cavity. According to an example, the air purifying device may comprise a ventilator housing, wherein the first air inlet, the first ventilator and the first air filter may be arranged in the ventilator housing. According to an example, the ventilator housing may comprise two first air filters arranged on opposite radial sides of the radial fan. The ventilator housing is connected to the internal cavity. According to an example, the guide element is arranged in, or is an integrated part of, the ventilator housing. The guide element may be placed on an inner surface of the ventilator housing directly opposite the first air inlet and the first ventilator. By means of the ventilator housing, assembling, maintenance and replacement of the first filter may be facilitated. The ventilator housing may be attached to the previously mentioned frame device. The distribution layer may be attached to the frame device. According to an example, the frame device may comprise a first frame element connected to the distribution layer, and a second frame element connected to the back layer. The ventilator housing may be attached to both the first and the second frame elements, whereby the stability of the air purifying device is improved. The first and second frame element may hence assist in separating the distribution layer from the back layer, and thus maintaining the width of the internal cavity.

The ventilator housing may be configured to be airtight. This means that the ventilator housing only allows airflow in through the first air inlet and out to the internal cavity. The air purifying device may also be configured to be airtight. This means that the air purifying device only allows airflow in through the first air inlet and out through the distribution layer. Hence, no air is allowed to bypass the first air filter and go straight into the inner area.

According to an example, the distribution layer may be arranged to distribute air in two distribution zones, arranged on each side of the guide element and/or the ventilator housing. The two distribution zones may be arranged on opposite sides of where the head is to be positioned. Hence, air may be essentially distributed towards the breathing area of the head from the sides of the head. The sides of the head is regarded as the sides of the head where ear and checks are positioned. By means of distributing air essentially from the side, the local environment of purified air within the inner area is more easily created and maintained at low air velocity, since the air is withheld within the inner area to a greater extent. Hence, draught is reduced in the inner area, and a more energy efficient solution is achieved. According to an aspect of the present disclosure, a child carrying device is provided, the child carrying device comprising an air purifying device as disclosed herein. Said child carrying device may be a pram, a stroller, a baby cot, a baby carrier or a child car seat.

According to an example, the child carrying device comprises a canopy or a convertible top, the canopy or the convertible top of the child carrying device comprises the back layer and the distribution layer of the air purifying device, when the air purifying device is an integrated part of the child carrying device.

According to an aspect of the present disclosure, a seat unit is provided, the seat unit comprising an air purifying device as disclosed herein. The seat unit may be a seat or a chair. The seat unit may for example comprise a wheel chair, an office chair, a gaming chair or a vehicle seat, such as an aircraft seat, train seat or a car seat.

According to an example, the seat unit comprises a headrest, wherein the headrest of the seat unit comprises the back layer and the distribution layer of the air purifying device, when the air purifying device is an integrated part of the seat unit.

The present disclosure will now be further illustrated with reference to the appended figures, wherein for the sake of clarity and understanding of the disclosure some details of no importance are deleted from the figures. Moreover, the figures shall not be considered drawn to scale as some features may be exaggerated in order to more clearly illustrate the disclosure.

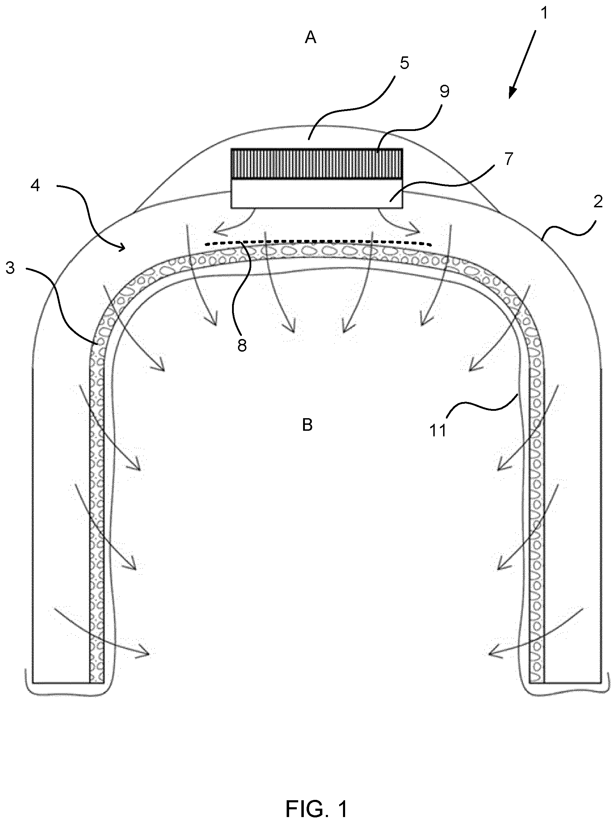

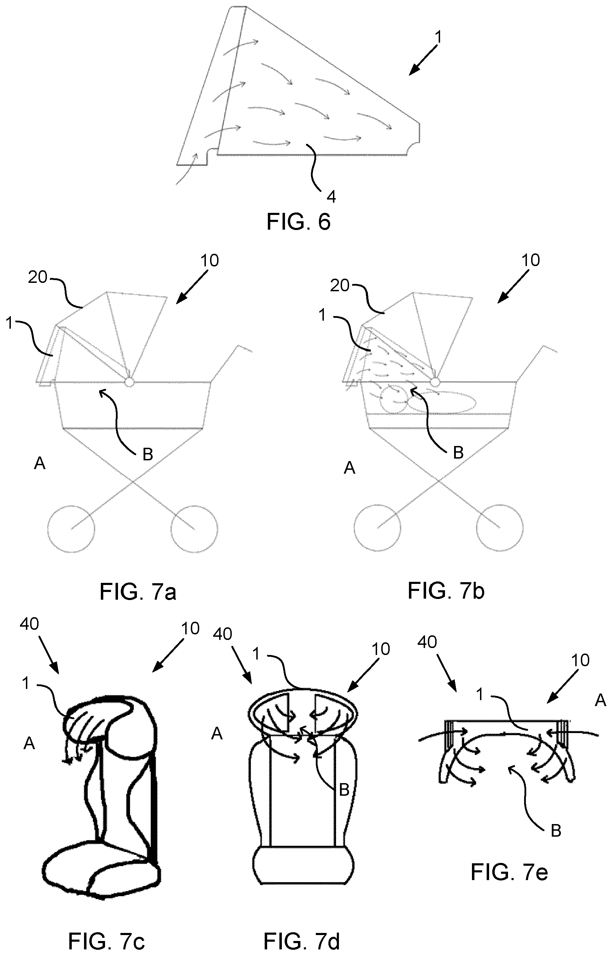

Figure 1 schematically illustrates a portable air purifying device 1 according to an example. The figure shows a top view cross section of the air purifying device 1. The air purifying device 1 is configured to be arranged in a child carrying device (as seen in Figure 7a-7b) in association with an inner area B of the child carrying device where the child's head is to be positioned. The air purifying device comprises a back layer 2; an air-permeable distribution layer 3 arranged opposite to the back layer 2, the distribution layer 3 being directed towards the inner area B; an internal cavity 4 formed between said back layer 2 and said distribution layer 3; a first air inlet 5 arranged in fluid communication with the internal cavity 4; a first ventilator 7 arranged to draw air from the surroundings A through the first air inlet 5 into the internal cavity 4, so that an overpressure is generated in the cavity 4; and a first air filter 9 removably arranged to purify the air from the surroundings A before being discharged from the air purifying device 1 into the inner area B of the child carrying device. The overpressure in the internal cavity 4 will force the air to flow from said internal cavity 4 through the distribution layer 3 towards the inner area B.. The air purifying device 1 further comprises a guide element 8 arranged opposite to the first air inlet 5 to guide the air entering the internal cavity 4 via the first air inlet 5. The arrows indicate the flow direction of the air through the air purifying device 1 and into the inner area B of the child carrying device.

The distribution layer 3 is arranged to at least partly surround the inner area B. The first air inlet 5 is arranged in a middle portion of the air purifying device 1 and the internal cavity 4 is configured to extend in at least two different directions from the first air inlet 5. In this figure, the guide element 8 is schematically illustrated to comprise an at least partly air-impermeable material. Alternatively, the guide element 8 may comprise an air-impermeable material arranged over a guide element area opposite to the first air inlet 5 inside the air purifying device 1, wherein the guide element area is at least as large as a first inlet area of the first air inlet 5. In this example, the first air filter 9 is arranged upstream of the distribution layer 3. This way, the air will be purified before being distributed through the distribution layer 3. The first air filter 9 is here arranged in association with the first ventilator 7, upstream of the first ventilator 7. In this example, the first air filter 9 is a compact filter, a bag filter or a panel filter.

In this figure, the air purifying device 1 further comprises an optional removable front layer 11 arranged to face the inner area B of the child carrying device. The front layer 11 may be a fabric or textile. The front layer is here arranged to cover/abut the distribution layer 3. The front layer 11 may be a padded layer, making the air purifying device 1 softer in case the child abuts the air purifying device 1.

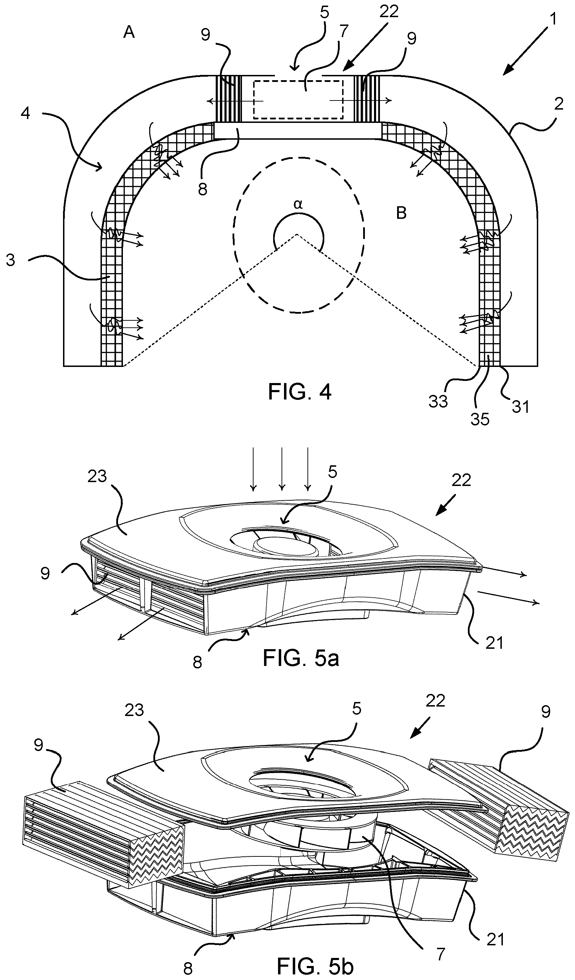

The thickness and material structure of the distribution layer 3 is configured such that the air will be evenly distributed within the distribution layer 3 before exiting said distribution layer 3. The distribution layer 3 comprises a material comprising air gaps and obstacles, wherein the air gaps and obstacles are configured to force the air to diffuse and take a meandering path through the distribution layer 3. In this figure, the distribution layer 3 is schematically illustrated to comprise a foam material. Alternatively, the distribution layer 3 may comprise a spacer material layer 35 arranged between two layers of fabric 31, 33 (shown in figure 4).

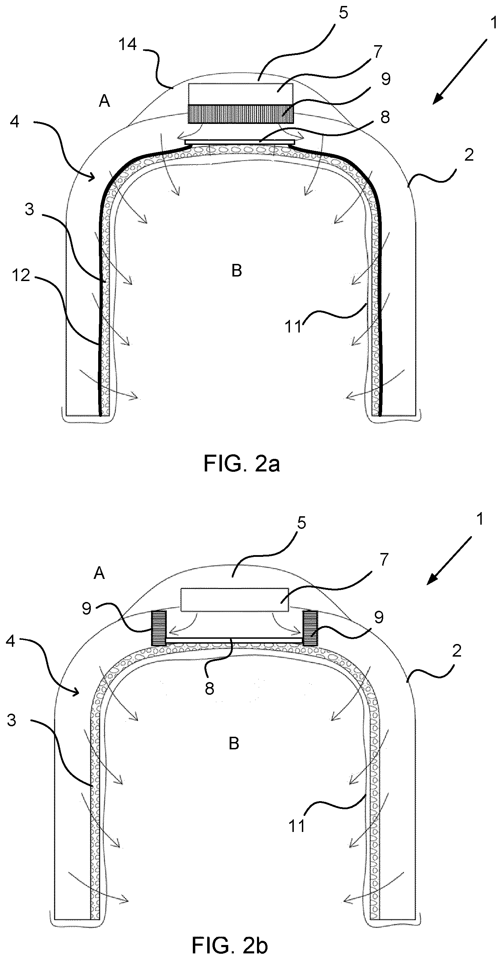

Figure 2a-b schematically illustrate a portable air purifying device 1 according to examples. Figure 2a shows an air purifying device 1 being configured as disclosed in Figure 1 with the difference that the first air filter 9 is arranged in association with the first ventilator 7, downstream of the first ventilator 7. In this example, the air purifying device 1 also comprises an air impermeable guide element 8 arranged inside the internal cavity 4 to guide the air inside the internal cavity 4. The guide element 8 may be arranged opposite to the first air inlet 5 to guide the air entering the internal cavity 4 via the first air inlet 5. The air purifying device 1 may further comprise a frame device 12. The distribution layer 3 may be attached to the frame device 12. The guide element 8 may be part of the frame device 12. In the example, the guide element 8 comprises an air-impermeable material arranged over a guide element area opposite to the first air inlet 5 inside the air purifying device 1, wherein the guide element area is at least as large as a first inlet area of the first air inlet 5. In this example, the guide element 8 may be an essentially flat air impermeable plate preventing the air from taking the shortest way out through the air purifying device 1 and thereby forcing the air to be distributed within the internal cavity 4. The air purifying device 1 may further comprise a cover 14 connected to the back layer 2. The cover 14 may be arranged to accommodate the first ventilator 7.

Figure 2b shows an air purifying device 1 as disclosed in Figure 1 with the difference that the first air filter is arranged inside the internal cavity 4, downstream of the first ventilator 7. In this example, the first air filter comprises two or more compact filters, bag filters or panel filters arranged in the internal cavity 4, such that the air will flow through the filters 9. In this example, an air impermeable guide element 8 is arranged between the two filters, preventing the air from bypassing the filters.

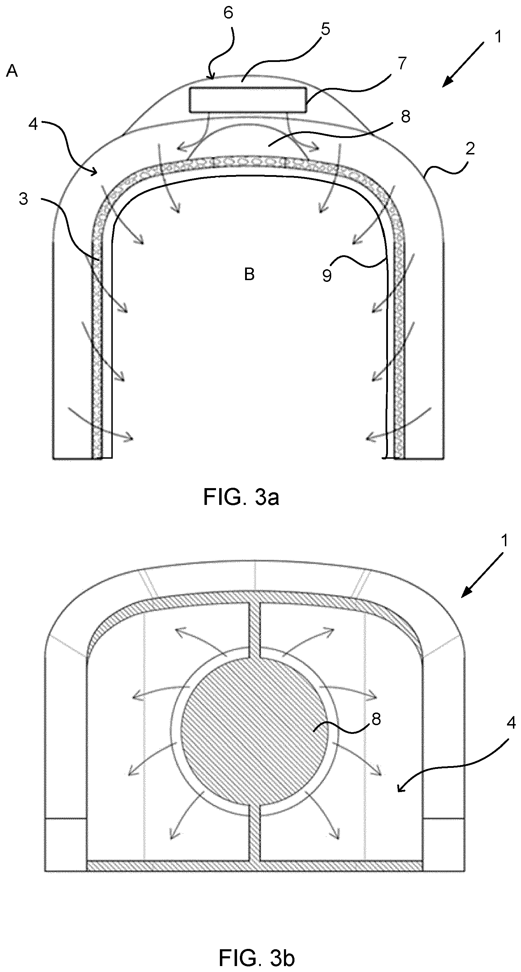

Figure 3a-b schematically illustrate a portable air purifying device 1 according to an example not covered by the invention. The air purifying device 1 is configured to be arranged in a child carrying device (as seen in Figure 7a-7b) in association with an inner area B of the child carrying device where the child's head is to be positioned. The air purifying device comprises a back layer 2; an air-permeable distribution layer 3 arranged opposite to the back layer 2, the distribution layer 3 being directed towards the inner area B; an internal cavity 4 formed between said back layer 2 and said distribution layer 3; a first air inlet 5 arranged in fluid communication with the internal cavity 4; a first ventilator 7 arranged to draw air from the surroundings A through the first air inlet 5 into the internal cavity 4, so that an overpressure is generated in the cavity 4; and a first air filter 9 removable arranged to purify the air from the surroundings A before being discharged from the air purifying device 1 into the inner area B of the child carrying device. The overpressure in the internal cavity 4 will force the air to flow from said internal cavity 4 through the distribution layer 3 towards the inner area B. The air purifying device 1 further comprises a guide element 8 arranged opposite to the first air inlet 5 to guide the air entering the internal cavity 4 via the first air inlet 5.

In the example in figure 3a, the first air filter 9 is arranged downstream of the distribution layer 3. This way, the air is evenly distributed through the distribution layer 3 before being filtered/purified and finally being discharged into the inner area B. The first air filter 9 is here arranged to face the inner area B of the child carrying device. The first air filter 9 may be configured to follow the extension of the distribution layer 3, in order to make sure that the air leaving the distribution layer 3 is purified through the first air filter 9 before being discharged into the inner area. The air purifying device may also comprise a second air filter 6 arranged to cover the first air inlet 5. In this example, the air purifying device 1 further comprises a guide element 8 arranged inside the internal cavity 4. The guide element 8 is in this example curved and thus has a convex surface facing the air from the first air inlet 5.

Figure 3b shows a cross-sectional view of the air-filtering device 1 in Figure 3a. This figure shows the position of the guide element 8 in the internal cavity 4 of the air purifying device 1. The arrows indicate the direction of airflow from the first ventilator (7, not shown), positioned behind the guide element 8 in this view, and towards the side portions of the air purifying device 1.

Figure 4 schematically illustrates an air purifying device 1 according to an example. The figure shows a top view cross section of the air purifying device 1. The air purifying device 1 is configured to be arranged in a child carrying device 10 or a seat unit 40 in association with an inner area B of the child carrying device 10 or the seat unit 40 where the head is to be positioned. The air purifying device 1 is portable or integrated in the child carrying device 10 or the seat unit 40. The air purifying device 1 comprises: a back layer 2; an air permeable distribution layer 3 arranged opposite to the back layer 2, the distribution layer 3 being directed towards the inner area B; an internal cavity 4 formed between said back layer 2 and said distribution layer 3; a first air inlet 5 arranged in fluid communication with the internal cavity 4; a first ventilator 7 arranged to draw air from the surroundings A through the first air inlet 5 into the internal cavity 4, so that an overpressure is generated in the internal cavity 4; and a first air filter 9 arranged to purify the air from the surroundings A before being discharged from the air purifying device 1 into the inner area B, wherein the first air filter 9 is removably arranged to allow replacement of the first air filter 9. The overpressure in the internal cavity 4 will force the air to flow from said internal cavity 4 through said distribution layer 3 towards the inner area B. The air purifying device 1 further comprises a guide element 8 arranged opposite to the first air inlet 5 to guide the air entering the internal cavity 4 via the first air inlet 5.

The distribution layer 3 is arranged to at least partly surround the inner area B. The air purifying device may be essentially arc-shaped or U-shaped. According to examples, the air purifying device may be arranged to extend at least 150 degrees, at least 180 degrees, or at least 210 degrees, or at least 240 degrees around the inner area B where the head is to be positioned. This is schematically illustrated as angle α in figure 5. In the example, the angle α is about 240 degrees. The first air inlet 5 is arranged in a middle portion of the air purifying device 1 and the internal cavity 4 is configured to extend in at least two different directions from the first air inlet 5. The first air filter 9 is arranged upstream of the distribution layer 3.

The thickness and material structure of the distribution layer 3 is configured such that the air will be evenly distributed within the distribution layer 3 before exiting said distribution layer 3. the distribution layer 3 comprises a material comprising air gaps and obstacles, wherein the air gaps and obstacles are configured to force the air to diffuse and take a meandering path through the distribution layer 3. The diffusion and meandering path is schematically illustrated in figure 4 as multiple split arrows. The distribution layer 3 comprises a spacer material layer 35 arranged between two layers of fabric 31, 33. The guide element 8 comprises an air-impermeable material arranged over a guide element area opposite to the first air inlet 5 inside the air purifying device 1, wherein the guide element area is at least as large as a first inlet area of the first air inlet 5. In the example, the first ventilator 7 comprises a radial fan. The air purifying device 1 further comprises a ventilator housing 22, wherein the first air inlet 5, the first ventilator 7 and the first air filter 9 are arranged in the ventilator housing 22. In the example, the guide element 8 is arranged in, or is an integrated part of, the ventilator housing 22. The distribution layer 3 may be arranged to distribute air in two distribution zones, arranged on each side of the ventilator housing 22.

Figures 5a-5b schematically illustrates a perspective view of a ventilator housing 22. Figure 5b shows an exploded view of the ventilator housing 22 shown in figure 5a. The ventilator housing 22 is configured to be arranged in the air purifying device 1 as seen in Figure 4. Thus, the first air inlet 5, the first ventilator 7 and the first air filter 9 are arranged in the ventilator housing 22. In the example, the first ventilator 7 comprises a radial fan. The first air filter 9 is illustrated as a pleated filter. The guide element 8 is arranged in, or is an integrated part of, the ventilator housing 22. The guide element 8 is arranged opposite to the first air inlet 5 to guide the air from the ventilator housing 22 to the internal cavity 4 without bypassing the first air filter 9. The ventilator housing 22 comprises a lid portion 23, wherein the first air inlet 5 is arranged, and a main portion 21 comprising outlet apertures configured to be connected to the inner cavity 4.

Figure 6 schematically illustrates a side view of a portable air purifying device 1 according to an example. The air purifying device 1 may be configured as disclosed in Figures 1, 2a-b, 3a-b, 4 or 5a-5b. The figure illustrates the airflow, as indicated by arrows, into and through the air purifying device 1. The air is drawn in through the first air inlet (5, not shown) by means of the first ventilator (7, not shown) and distributed within the internal cavity 4.

Figures 7a-e schematically illustrates airflow in an air purifying device 1 arranged on a child carrying device 10 and/or a seat unit 40 according to examples. The air purifying device 1 may be configured as disclosed in Figures 1, 2a-b, 3a-b, 4, 5a-5b or 6. The child carrying device 10 in Figures 7a-b is a baby pram. In this example, the air purifying device 1 is arranged in connection with a convertible top 20 of the pram 10. The first air inlet 5 may be positioned on a lower portion of the back layer 2 of the air purifying device 1, facing the surroundings A. The inner area B is indicated inside the pram 10, where a child is to be positioned. Figure 7b discloses the airflow of the air purifying device 1 in Figure 7a when the first ventilator (7, not shown) is activated. The airflow is indicated by arrows. Air will be drawn in from the surroundings A, through the first air inlet 5. Thereafter, the air will be distributed within the air purifying device 1 and exit the air purifying device 1 and reach the inner area B of the pram 10.

Figures 7c-e show an example where the child carrying device 10 is a child car seat. Figure 7c shows a perspective view, Figure 7d shows a front view and Figure 7e shows a top view of the child car seat 10. The child car seat 10 may also be referred to as a seat unit 40. In this example, the air purifying device 1 is arranged in connection with a top end of the child car seat 10 and the inner area B is indicated inside the child car seat 10, where a child is to be positioned. The first air inlet 5 may be positioned in the back layer 2 of the air purifying device 1, at the side of the air purifying device 1, facing the surroundings A. The air purifying device 1 may in this example draw air from each side of the child car seat 10. Air will be drawn in from the surroundings A, through the first air inlet (5, not shown). Thereafter, the air will be distributed within the air purifying device 1 and exit the air purifying device 1 and reach the inner area B of the child car seat. The airflow is indicated by arrows.

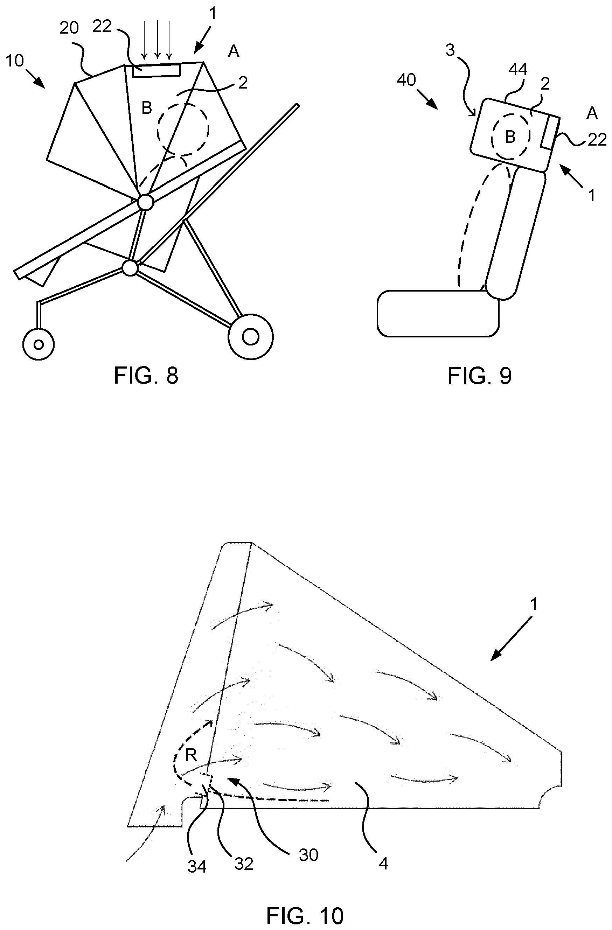

Figure 8 schematically illustrates a child carrying device 10, comprising an air purifying device 1 according to an example. In the example, the air purifying device 1 is an integrated part of the child carrying device 10. The child carrying device 10 comprises a canopy or a convertible top 20. The canopy or the convertible top 20 of the child carrying device 10 comprises the back layer 2 and the distribution layer 3 of the air purifing device 1. As schematically illustrated, the air purifying device 1 may comprise a ventilator housing 22 as shown in figure 4 and figures 5a-b.

Figure 9 schematically a seat unit 40, comprising an air purifying device 1 according to an example. In the example, the air purifying device 1 is an integrated part of the seat unit 40. The seat unit 40 comprises a headrest 44, wherein the headrest 44 of the seat unit 40 comprises the back layer 2 and the distribution layer 3 of the air purifying device 1. As schematically illustrated, the air purifying device 1 may comprise a ventilator housing 22 as shown in figure 4 and figures 5a-b.

Figure 10 schematically illustrates a portable air purifying device 1 according to an example. The air purifying device 1 may be configured as disclosed in Figures 1, 2a-b, 3a-b or 6. In this example, the air purifying device 1 comprises a recirculation device 30 arranged to draw purified air from the inner area B into the air purifying device 1. This way, the purified air in the inner area B will pass through the air purifying device 1 and once again be discharged through the outlet area into the inner area B. The recirculated purified air is illustrated with the dotted arrow with reference R. The recirculation device 30 may comprise a second air inlet 32 arranged in fluid communication with the inner area B and a recirculation channel 34 arranged to lead the purified air drawn from the inner area B to a position upstream of the first ventilator (7 not shown). The recirculation channel 34 may thus be arranged in fluid communication with the first air inlet 5. The second air inlet 32 may comprise an aperture in the outermost layer facing the inner area B of the child carrying device 10.

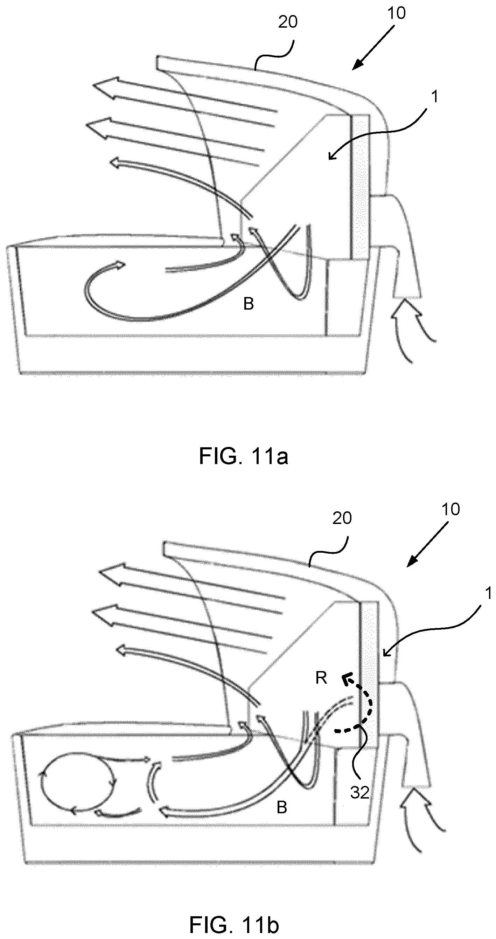

Figures 11a-b illustrate the airflow patterns within a child carrying device 10, in this case a pram, fitted with the air purifying device 1 of the present disclosure. The air purifying device 1 may be configured as disclosed in Figures 1, 2a-b, 3a-b, 6 or 10. The air purifying device 1 is fitted on an upper inner surface of a convertible top 20. A larger arrow illustrates a higher airflow, and a smaller, narrower arrow illustrates a lower airflow. Figure 11a illustrates the airflow with an air purifying device 1 having only a first air inlet 5. Figure 11b illustrates the airflow with an air purifying device 1 having a first air inlet 5 and a second air inlet 32. In Figure 11b the dotted arrow R illustrates the recirculation of air through the second air inlet 32. As can be seen, this entails that the airflow more extensively reaches all parts of the pram 10.

The foregoing description of the preferred examples of the present disclosure is provided for illustrative and descriptive purposes. It is not intended to be exhaustive or to restrict the disclosure to the variants described. Many modifications and variations will obviously be apparent to one skilled in the art. The examples of the present disclosure have been chosen and described in order best to explain the principles of the disclosure and its practical applications and hence make it possible for specialists to understand the disclosure for various embodiments and with the various modifications appropriate to the intended use.

## Claims

1. An air purifying device (1), configured to be arranged in a child carrying device (10) or a seat unit (40) in association with an inner area (B) of the child carrying device (10) or the seat unit (40) where the head is to be positioned, the air purifying device (1) is portable or integrated in the child carrying device (10) or the seat unit (40), the air purifying device (1) being essentially U-shaped with a back portion and side portions, the air purifying device (1) comprises:
a back layer (2);
an air permeable distribution layer (3) arranged opposite to the back layer (2), the distribution layer (3) being directed towards the inner area (B);
an internal cavity (4) formed between said back layer (2) and said distribution layer (3);
a first air inlet (5) arranged in fluid communication with the internal cavity (4);
a first ventilator (7) arranged to draw air from the surroundings (A) through the first air inlet (5) into the internal cavity (4), so that an overpressure is generated in the internal cavity (4); and
a first air filter (9) arranged to purify the air from the surroundings (A) before being discharged from the air purifying device (1) into the inner area (B), wherein the first air filter (9) is arranged downstream of the first air inlet (5) and upstream of the distribution layer (3), wherein the first air filter (9) is removably arranged to allow replacement of the first air filter (9),
wherein the overpressure in the internal cavity (4) will force the air to flow from said internal cavity (4) through said distribution layer (3) towards the inner area (B),
the first air inlet (5) is arranged in the back portion of the air purifying device (1),
the air purifying device (1) further comprises a guide element (8) arranged opposite the first air inlet (5) to guide the air entering the internal cavity (4) via the first air inlet (5).

2. The air purifying device (1) according to claim 1, wherein the air purifying device (1) is arranged to at least partly surround the inner area (B).

3. The air purifying device (1) according to any one of the preceding claims, wherein the first air filter (9) is arranged downstream of the first ventilator (7).

4. The air purifying device (1) according to any one of the preceding claims, wherein the first air filter (9) comprises an electrostatically charged material and/or a triboelectric filter and/or active carbon and/or at least one HEPA-filter and/or at least one fibreglass filter and/or at least one pleated filter and/or at least one cartridge filter.

5. The air purifying device (1) according to any one of the preceding claims, wherein the thickness and material structure of the distribution layer (3) is configured such that the air will be evenly distributed within the distribution layer (3) before exiting said distribution layer (3).

6. The air purifying device (1) according to any one of the preceding claims, wherein the distribution layer (3) comprises a material comprising air gaps and obstacles, wherein the air gaps and obstacles are configured to force the air to diffuse and take a meandering path through the distribution layer (3).

7. The air purifying device (1) according to any one of the preceding claims, wherein the distribution layer (3) comprises a spacer material layer (32) arranged between two layers of fabric (31, 33) and/or wherein the distribution layer (3) comprises a foam material.

8. The air purifying device (1) according to any one of the preceding claims, wherein the guide element (8) comprises an air-impermeable material arranged over a guide element area opposite to the first air inlet (5) inside the air purifying device (1), wherein the guide element area is at least as large as a first inlet area of the first air inlet (5).

9. The air purifying device (1) according to any one of the preceding claims, wherein the air purifying device (1) comprises a ventilator housing (22), wherein the first air inlet (5), the first ventilator (7) and the first air filter (9) are arranged in the ventilator housing (22).

10. The air purifying device (1) according to claim 9, wherein the guide element (8) is arranged in, or is an integrated part of, the ventilator housing (22).

11. The air purifying device (1) according to any one of the preceding claims, further comprising:
a recirculation device (30) arranged to draw purified air from the inner area (B) into the air purifying device (1).

12. A child carrying device (10), comprising an air purifying device (1) according to any one of the preceding claims.

13. The child carrying device (10) according to claim 12, wherein the air purifying device (1) is an intergrated part of the child carrying device (10) and the child carrying device (10) comprises a canopy or a convertible top (20), the canopy or the convertible top (20) of the child carrying device (10) comprises the back layer (2) and the distribution layer (3) of the air purifying device (1).

14. A seat unit (40), comprising an air purifying device (1) according to any one of the claims 1-11.

15. The seat unit (40) according to claim 14, wherein the air purifying device (1) is an integrated part of the seat unit (40) and the seat unit (40) comprises a headrest (44), wherein the headrest (44) of the seat unit (40) comprises the back layer (2) and the distribution layer (3) of the air purifying device (1).

## Patentansprüche

1. Luftreinigungsvorrichtung (1), die dazu konfiguriert ist, in einer Kindertragevorrichtung (10) oder einer Sitzeinheit (40) im Zusammenhang mit einem Innenbereich (B) der Kindertragevorrichtung (10) oder der Sitzeinheit (40) an der Stelle, an welcher der Kopf zu positionieren ist, angeordnet zu werden, wobei die Luftreinigungsvorrichtung (1) tragbar oder in der Kindertragevorrichtung (10) oder der Sitzeinheit (40) integriert ist, die Luftreinigungsvorrichtung (1) im Wesentlichen U-förmig ist und einen Rückseitenabschnitt und Seitenabschnitte aufweist und die Luftreinigungsvorrichtung (1) Folgendes umfasst:
eine Rückseitenschicht (2);
eine luftdurchlässige Verteilungsschicht (3), die gegenüber der Rückseitenschicht (2) angeordnet ist, wobei die
Verteilungsschicht (3) in Richtung des Innenbereichs (B) gerichtet ist;
einen internen Hohlraum (4), der zwischen der Rückseitenschicht (2) und der Verteilungsschicht (3) gebildet ist;
einen ersten Lufteinlass (5), der in Fluidverbindung mit dem internen Hohlraum (4) angeordnet ist;
einen ersten Ventilator (7), der angeordnet ist, um Luft aus der Umgebung (A) durch den ersten Lufteinlass (5) in den internen Hohlraum (4) anzusaugen, sodass in dem internen Hohlraum (4) ein Überdruck generiert wird; und
ein erstes Luftfilter (9), das angeordnet ist, um die Luft aus der Umgebung (A) zu reinigen, bevor sie aus der Luftreinigungsvorrichtung (1) in den Innenbereich (B) abgegeben wird, wobei das erste Luftfilter (9) stromabwärts des ersten Lufteinlasses (5) und stromaufwärts der Verteilungsschicht (3) angeordnet ist, wobei das erste Luftfilter (9) entfernbar angeordnet ist, um einen Austausch des ersten Luftfilters (9) zu ermöglichen,
wobei der Überdruck in dem internen Hohlraum (4) die Luft dazu zwingt, aus dem internen Hohlraum (4) durch die Verteilungsschicht (3) in Richtung des Innenbereichs (B) zu strömen,
der erste Einlass (5) in dem Rückseitenabschnitt der Luftreinigungsvorrichtung (1) angeordnet ist und
die Luftreinigungsvorrichtung (1) ferner ein Führungselement (8) umfasst, das gegenüber dem ersten Lufteinlass (5) angeordnet ist, um die Luft zu führen, die über den ersten Lufteinlass (5) in den internen Hohlraum (4) eintritt.

2. Luftreinigungsvorrichtung (1) nach Anspruch 1, wobei die Luftreinigungsvorrichtung (1) angeordnet ist, um den Innenbereich (B) mindestens teilweise zu umgeben.

3. Luftreinigungsvorrichtung (1) nach einem der vorhergehenden Ansprüche, wobei das erste Luftfilter (9) stromabwärts des ersten Ventilators (7) angeordnet ist.

4. Luftreinigungsvorrichtung (1) nach einem der vorhergehenden Ansprüche, wobei das erste Luftfilter (9) ein elektrostatisch geladenes Material und/oder ein triboelektrisches Filter und/oder Aktivkohle und/oder mindestens ein HEPA-Filter und/oder mindestens ein Glasfaserfilter und/oder mindestens ein Plisseefilter und/oder mindestens ein Patronenfilter umfasst.

5. Luftreinigungsvorrichtung (1) nach einem der vorhergehenden Ansprüche, wobei die Dicke und die Materialstruktur der Verteilungsschicht (3) derart konfiguriert ist, dass die Luft vor Verlassen der Verteilungsschicht (3) gleichmäßig innerhalb der Verteilungsschicht (3) verteilt wird.

6. Luftreinigungsvorrichtung (1) nach einem der vorhergehenden Ansprüche, wobei die Verteilungsschicht (3) ein Material umfasst, das Luftspalte und Hindernisse umfasst, wobei die Luftspalte und Hindernisse dazu konfiguriert sind, die Luft zu zwingen, sich zu zerstreuen und einen mäandernden Pfad durch die Verteilungsschicht (3) zu nehmen.

7. Luftreinigungsvorrichtung (1) nach einem der vorhergehenden Ansprüche, wobei die Verteilungsschicht (3) eine Abstandhaltermaterialschicht (32) umfasst, die zwischen zwei Stoffschichten (31, 33) angeordnet ist, und/oder wobei die Verteilungsschicht (3) ein Schaummaterial umfasst.

8. Luftreinigungsvorrichtung (1) nach einem der vorhergehenden Ansprüche, wobei das Führungselement (8) ein luftundurchlässiges Material umfasst, das über einem Führungselementbereich gegenüber dem ersten Lufteinlass (5) innerhalb der Luftreinigungsvorrichtung (1) angeordnet ist, wobei der Führungselementbereich mindestens so groß wie ein erster Einlassbereich des ersten Lufteinlasses (5) ist.

9. Luftreinigungsvorrichtung (1) nach einem der vorhergehenden Ansprüche, wobei die Luftreinigungsvorrichtung (1) ein Ventilatorgehäuse (22) umfasst, wobei der erste Lufteinlass (5), der erste Ventilator (7) und das erste Luftfilter (9) in dem Ventilatorgehäuse (22) angeordnet sind.

10. Luftreinigungsvorrichtung (1) nach Anspruch 9, wobei das Führungselement (8) in dem Ventilatorgehäuse (22) angeordnet oder ein integrierter Teil davon ist.

11. Luftreinigungsvorrichtung (1) nach einem der vorhergehenden Ansprüche, ferner umfassend:
eine Rückführungsvorrichtung (30), die angeordnet ist, um gereinigte Luft aus dem Innenbereich (B) in die Luftreinigungsvorrichtung (1) zu saugen.

12. Kindertragevorrichtung (10), umfassend eine Luftreinigungsvorrichtung (1) nach einem der vorhergehenden Ansprüche.

13. Kindertragevorrichtung (10) nach Anspruch 12, wobei die Luftreinigungsvorrichtung (1) ein integrierter Teil der Kindertragevorrichtung (10) ist und die Kindertragevorrichtung (10) ein Schutzdach oder ein Faltverdeck (20) umfasst, wobei das Schutzdach oder das Faltverdeck (20) der Kindertragevorrichtung (10) die Rückseitenschicht (2) und die Verteilungsschicht (3) der Luftreinigungsvorrichtung (1) umfasst.

14. Sitzeinheit (40), umfassend eine Luftreinigungsvorrichtung (1) nach einem der Ansprüche 1-11.

15. Sitzeinheit (40) nach Anspruch 14, wobei die Luftreinigungsvorrichtung (1) ein integrierter Teil der Sitzeinheit (40) ist und die Sitzeinheit (40) eine Kopfstütze (44) umfasst, wobei die Kopfstütze (44) der Sitzeinheit (40) die Rückseitenschicht (2) und die Verteilungsschicht (3) der Luftreinigungsvorrichtung (1) umfasst.

## Revendications

1. Dispositif de purification d'air (1), configuré pour être agencé dans un dispositif de transport d'enfant (10) ou une unité de siège (40) en association avec une zone intérieure (B) du dispositif de transport d'enfant (10) ou de l'unité de siège (40) où la tête doit être positionnée, le dispositif de purification d'air (1) est portable ou intégré dans le dispositif de transport d'enfant (10) ou l'unité de siège (40), le dispositif de purification d'air (1) étant essentiellement en forme de U avec une partie arrière et des parties latérales, le dispositif de purification d'air (1) comprend :
une couche arrière (2) ;
une couche de distribution perméable à l'air (3) agencée à l'opposé de la couche arrière (2), la couche de distribution (3) étant dirigée vers la zone intérieure (B) ;
une cavité intérieure (4) formée entre ladite couche arrière (2) et ladite couche de distribution (3) ;
une première entrée d'air (5) agencée en communication fluidique avec la cavité intérieure (4) ;
une première soufflante (7) agencée pour aspirer l'air à partir de l'environnement (A) à travers la première entrée d'air (5) dans la cavité intérieure (4), de sorte qu'une surpression est générée dans la cavité intérieure (4) ; et
un premier filtre à air (9) agencé pour purifier l'air à partir de l'environnement (A) avant son évacuation à partir du dispositif de purification d'air (1) vers la zone intérieure (B), dans lequel le premier filtre à air (9) est agencé en aval de la première entrée d'air (5) et en amont de la couche de distribution (3), dans lequel le premier filtre à air (9) est agencé de manière amovible pour permettre le remplacement du premier filtre à air (9),
dans lequel la surpression dans la cavité intérieure (4) forcera l'air à s'écouler à partir de ladite cavité intérieure (4) à travers ladite couche de distribution (3) vers la zone intérieure (B),
la première entrée d'air (5) est agencée dans la partie arrière du dispositif de purification d'air (1),
le dispositif de purification d'air (1) comprend en outre un élément de guidage (8) agencé à l'opposé de la première entrée d'air (5) pour guider l'air entrant dans la cavité intérieure (4) par l'intermédiaire de la première entrée d'air (5).

2. Dispositif de purification d'air (1) selon la revendication 1, dans lequel le dispositif de purification d'air (1) est agencé pour entourer au moins partiellement la zone intérieure (B).

3. Dispositif de purification d'air (1) selon l'une quelconque des revendications précédentes, dans lequel le premier filtre à air (9) est agencé en aval de la première soufflante (7).

4. Dispositif de purification d'air (1) selon l'une quelconque des revendications précédentes, dans lequel le premier filtre à air (9) comprend un matériau chargé électrostatiquement et/ou un filtre triboélectrique et/ou du charbon actif et/ou au moins un filtre HEPA et/ou au moins un filtre en fibre de verre et/ou au moins un filtre plissé et/ou au moins un filtre à cartouche.

5. Dispositif de purification d'air (1) selon l'une quelconque des revendications précédentes, dans lequel l'épaisseur et la structure de matériau de la couche de distribution (3) sont configurées de sorte que l'air soit uniformément distribué dans la couche de distribution (3) avant de sortir de ladite couche de distribution (3).

6. Dispositif de purification d'air (1) selon l'une quelconque des revendications précédentes, dans lequel la couche de distribution (3) comprend un matériau comprenant des espaces d'air et des obstacles, dans lequel les espaces d'air et les obstacles sont configurés pour forcer l'air à se diffuser et à prendre un chemin sinueux à travers la couche de distribution (3).

7. Dispositif de purification d'air (1) selon l'une quelconque des revendications précédentes, dans lequel la couche de distribution (3) comprend une couche de matériau d'espacement (32) agencée entre deux couches de tissu (31, 33) et/ou dans lequel la couche de distribution (3) comprend un matériau en mousse.

8. Dispositif de purification d'air (1) selon l'une quelconque des revendications précédentes, dans lequel l'élément de guidage (8) comprend un matériau imperméable à l'air agencé sur une zone d'élément de guidage opposée à la première entrée d'air (5) à l'intérieur du dispositif de purification d'air (1), dans lequel la zone d'élément de guidage est au moins aussi grande qu'une première zone d'entrée de la première entrée d'air (5).

9. Dispositif de purification d'air (1) selon l'une quelconque des revendications précédentes, dans lequel le dispositif de purification d'air (1) comprend un boîtier de soufflante (22), dans lequel la première entrée d'air (5), la première soufflante (7) et le premier filtre à air (9) sont agencés dans le boîtier de soufflante (22).

10. Dispositif de purification d'air (1) selon la revendication 9, dans lequel l'élément de guidage (8) est agencé dans le boîtier de soufflante (22) ou fait partie intégrante de celui-ci.

11. Dispositif de purification d'air (1) selon l'une quelconque des revendications précédentes, comprenant en outre :
un dispositif de recirculation (30) agencé pour aspirer l'air purifié à partir de la zone intérieure (B) dans le dispositif de purification d'air (1).

12. Dispositif de transport d'enfant (10), comprenant un dispositif de purification d'air (1) selon l'une quelconque des revendications précédentes.

13. Dispositif de transport d'enfant (10) selon la revendication 12, dans lequel le dispositif de purification d'air (1) est une partie intégrée du dispositif de transport d'enfant (10) et le dispositif de transport d'enfant (10) comprend un auvent ou un toit convertible (20), l'auvent ou le toit convertible (20) du dispositif de transport d'enfant (10) comprend la couche arrière (2) et la couche de distribution (3) du dispositif de purification d'air (1).

14. Unité de siège (40), comprenant un dispositif de purification d'air (1) selon l'une quelconque des revendications 1 à 11.

15. Unité de siège (40) selon la revendication 14, dans laquelle le dispositif de purification d'air (1) est une partie intégrée de l'unité de siège (40) et l'unité de siège (40) comprend un appui-tête (44), dans laquelle l'appui-tête (44) de l'unité de siège (40) comprend la couche arrière (2) et la couche de distribution (3) du dispositif de purification d'air (1).
